# FASCICULE DE BREVET EUROPEEN

(11) **EP 1 021 018 B1**
(45) Date de publication et mention de la délivrance du brevet: **15.04.2009**
(21) Numéro de dépôt: 99401989.1
(22) Date de dépôt: 05.08.1999
(51) Int. Cl.: H04L 12/56, H04Q 11/04

(54) **Méthode de gestion d'une file d'attente de paquets numériques**
Verfahren zur Verwaltung einer Paketwarteschlange
Method of managing a packet queue

(30) Priorité: 13.08.1998 FR 9809915
(43) Date de publication de la demande: 19.07.2000
(73) Titulaire: Alcatel Lucent, 75008 Paris (FR)
(72) Inventeur: Frene, Patrick, 92170 Vanves (FR)
(74) Mandataire: Korakis-Ménager, Sophie

(56) Documents cités:
- EP-A- 0 632 622
- EP-A- 0 710 046
- EP-A- 0 782 303
- GB-A- 2 324 678
- CHIUSSI F ET AL: "IMPLEMENTING FAIR QUEUEING IN ATM SWITCHES - PART 2., THE LOGARITHMIC CALENDAR QUEUE" IEEE GLOBAL TELECOMMUNICATIONS CONFERENCE, PHOENIX, ARIZONA, NOV. 3 - 8, 1997, vol. 1, 3 novembre 1997 (1997-11-03), pages 519-525, XP000737586 INSTITUTE OF ELECTRICAL AND ELECTRONICS ENGINEERS

## Description

La présente invention concerne une méthode de gestion d'une file d'attente de cellules numériques.

Dans le domaine des transmissions numériques, une telle méthode a pour objectif de déterminer, pour des données ou paquets reçus en provenance de diverses sources, dans quel ordre ces paquets doivent être réémis à destination d'un équipement externe.

Naturellement, l'ordre suivant lequel les différents paquets sont réémis peut différer de celui dans lequel ils sont reçus. Cette opération de classement des paquets reçus est généralement référencée sous le vocable de gestion de file d'attente.

Le classement se fait selon un niveau de priorité de chacune des sources, ce niveau de priorité étant souvent fonction du rythme périodique auquel les sources émettent les paquets successifs.

Pour réaliser un classement de ce type, on connaît la demande de brevet français FR 2 715 258 qui propose un dispositif de tri de données. Ce dispositif comprend une colonne descendante de registres chaînés pour stocker les différentes données, le premier registre de cette colonne étant prévu pour recevoir les données à classer. Il comprend également une colonne montante de registres chaînés, le dernier registre de cette colonne contenant la donnée à réémettre. Chaque registre de la colonne montante est de plus associé à un registre de la colonne descendante de manière biunivoque et l'opération de classement se fait par échanges des données stockées dans les registres de la colonne descendante avec celles qui sont stockées dans les registres de la colonne montante. Sans entrer dans les détails du fonctionnement de ce dispositif, on comprend bien que la gestion du transfert des données entre les registres interconnectés présente une certaine complexité du fait de la progression pas à pas des données dans chacune des colonnes.

Le déplacement d'une donnée requiert un nombre de transferts correspondant au nombre de registres qu'il convient de faire franchir à cette donnée. Il s'ensuit que ce déplacement est d'autant plus coûteux en terme de nombre de transferts que le nombre de registres dans chaque colonne est important.

Le document EP 0782303 décrit une méthode de gestion de file d'attente comprenant les étapes suivantes :
- stocker le dernier paquet reçu à une adresse de réception dans une mémoire tampon,
- calculer pour ce dernier paquet reçu un intervalle temporel représentant le temps théorique de sa sortie de ladite file d'attente ;
- constituer une roue temporelle, dans laquelle chaque intervalle temporel contient un identificateur identifiant un circuit temporel à servir, et faire tourner cette roue temporelle à un rythme prédéterminé pour retransmettre successivement les paquets stockés ; et dans laquelle chaque intervalle temporel contient un indicateur binaire indiquant s'il contient ou non un identificateur ;
- regarder dans la roue temporelle N intervalles temporels à la fois, en testant simultanément N indicateurs binaire de N intervalles temporels consécutifs, à partir de l'intervalle courant.

La présente invention a pour objet une méthode de gestion de file d'attente nécessitant un nombre d'opérations limité pour le classement des paquets. Elle est particulièrement bien adaptée aux files d'une longueur relativement importante.

Selon l'invention, la méthode de gestion d'une file d'attente de paquets reçus d'une pluralité de sources comprend les étapes suivantes :
- stockage du dernier paquet reçu à une adresse de réception dans une mémoire tampon,
- établissement pour ce dernier paquet reçu d'une estampille temporelle représentant le temps théorique de sa sortie de la file d'attente,
et la méthode comprend de plus les étapes suivantes :
- insertion de l'adresse de réception dans un programmateur à un emplacement identifié par l'estampille temporelle du dernier paquet reçu,
- positionnement dans un état actif d'un bit d'occupation associé à cette estampille temporelle,
- détermination du ou des premiers paquets devant sortir de la file d'attente à partir du premier bit d'occupation actif suit celui du paquet qui vient de quitter la file, les bits d'occupation étant classés selon l'ordre croissant des estampilles temporelles auxquelles ils sont associés,
- positionnement dans un état inactif du bit d'occupation de ce premier paquet lorsqu'il quitte la file,
et est caractérisée en ce que, les bits d'occupation successifs étant regroupés en mots, le bit de poids faible du premier mot étant le bit d'occupation qui suit celui de la cellule qui vient de quitter la file, un indicateur est établi pour chacun de ces mots qui vaut zéro lorsque tous les bits du mot sont inactifs, et qui vaut un dans le cas contraire.

Lorsque, le dernier paquet reçu provient d'une source affectée d'un niveau de priorité, l'estampille temporelle de ce paquet est fonction de ce niveau de priorité.

A titre d'exemple, la source émettant des paquets à un débit auquel correspond une période moyenne, le niveau de priorité correspondant à cette période, l'estampille temporelle est supérieure ou égale à celle du paquet précédent provenant de cette source augmentée de cette période.

De plus, l'estampille temporelle est également supérieure ou égale à l'estampille temporelle du premier paquet.

De plus, suite au positionnement d'un bit d'occupation, l'indicateur du mot correspondant est recalculé.

Il est ainsi possible de déterminer le ou les premiers paquets devant sortir de la file d'attente en recherchant le premier indicateur non nul puis le premier bit non nul de cet indicateur.

Cependant, selon une caractéristique additionnelle, les indicateurs successifs étant regroupés en champs, un index est établi pour chacun de ces champs qui vaut zéro lorsque tous les bits du mot sont inactifs et qui vaut un dans le cas contraire.

Dans ce cas, suite au positionnement d'un bit d'occupation, l'indicateur du mot correspondant ayant été recalculé, l'index du champ comprenant cet indicateur et recalculé.

Ainsi, avantageusement, la détermination du ou des premiers paquets devant sortir de la file d'attente s'effectue en recherchant le premier index non nul, puis le premier indicateur non nul de cet index et enfin le premier bit non nul de cet indicateur.

Par ailleurs, de préférence, l'estampille temporelle est établie modulo une constante de capacité prédéterminée.

Selon une caractéristique additionnelle, le programmateur comporte deux pages au moins et la détermination du ou des premiers paquets devant sortir de la file d'attente s'effectue page par page.

En tout état de cause, l'invention vise également le cas où l'un des emplacements du programmateur recèle une liste chaînée d'adresses.

La présente invention apparaîtra maintenant avec plus de détails dans le cadre de la description qui suit en référence aux figures annexées qui représentent :
- La figure 1, un schéma des organes essentiels à la mise en oeuvre de l'invention,
- La figure 2, un diagramme explicitant une caractéristique de l'invention.

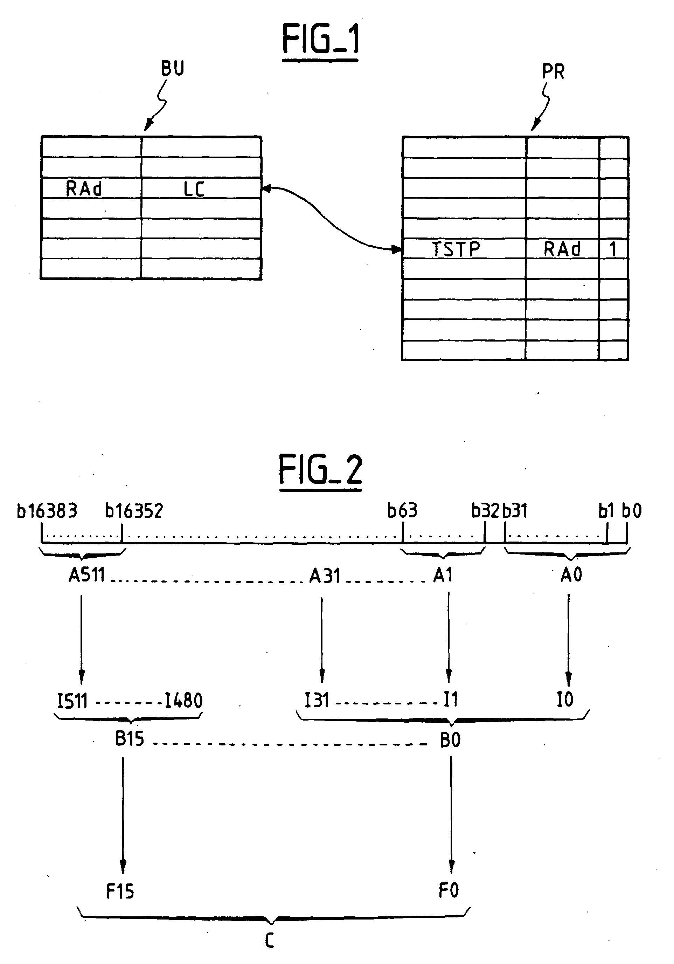

En référence à la figure 1, la première étape de la méthode consiste à enregistrer le dernier paquet reçu LC par un canal de transmission à une adresse de réception RAd d'une mémoire tampon BU.

L'invention fait appel à un programmateur PR qui est en fait une mémoire particulière associant à un identificateur temporel qui est le moyen d'accès à cette mémoire, une donnée et un bit d'occupation. Tous les bits d'occupation sont initialisés à zéro, ce qui correspond, par convention, à un état inactif.

On suppose par ailleurs, pour la simplicité de l'exposé, que les différentes sources produisant des paquets sont affectées d'un niveau de priorité qui dépend uniquement du débit auquel elles émettent les paquets. Ce niveau de priorité sera facilement repéré par la période moyenne T séparant deux paquets successifs.

Le programmateur PR qui figure la file d'attente proprement dite est prévu pour mémoriser en tant que données les différentes adresses utilisées dans la mémoire tampon BU.

C'est à partir de ce programmateur PR qu'est identifié le premier paquet de la file d'attente, c'est-à-dire celui qu'il convient de réémettre à destination d'un équipement externe. On définit ici par convention un temps virtuel TV comme la valeur de l'identificateur temporel auquel était associé le paquet en cours de réémission ou bien celui qui a été réémis en dernier lieu.

Ainsi, à la réception du dernier paquet LC, on calcule une estampille temporelle TSTP associée à ce paquet. Cette estampille temporelle prend la valeur de l'estampille associée au paquet précédemment reçu de la même source augmentée de la période T de cette source. Il faut cependant prendre en compte la réception du premier paquet d'une source, cas où la méthode précédente ne peut s'appliquer. Dans ce cas, on fixe la valeur de l'estampille temporelle à celle du temps virtuel TV. On peut donc, à titre d'exemple, définir l'estampille temporelle comme la valeur la plus grande entre, d'une part, la valeur de celle du paquet précédent augmentée d'une période T, et d'autre part le temps virtuel TV. On peut également retenir comme estampille temporelle la valeur la plus grande entre la valeur de celle du paquet précédent et le temps virtuel TV, puis ajouter à ce résultat une période T.

Une fois l'estampille temporelle TSTP calculée, l'adresse de réception RAd à laquelle est mémorisé le dernier paquet LC dans la mémoire tampon BU est enregistrée dans le programmateur PR en tant que donnée associée à l'identificateur temporel ayant la valeur de cette estampille temporelle TSTP.

Naturellement, l'estampille temporelle est adaptée à la base de temps qui définit les identificateurs temporels et l'on retient pour cette estampille une valeur majorée qui corresponde à une valeur entière de la base de temps.

D'autre part, le bit d'occupation correspondant à cette estampille temporelle est positionné à un, ce qui correspond, par convention, à un état actif. Ce bit sera repositionné à zéro lors de la réémission du paquet correspondant.

Il apparaît ainsi que les paquets à réémettre sont ceux qui sont associés à un bit d'occupation de valeur un. Ces paquets sont par ailleurs classés dans le programmateur PR selon l'ordre de réémission.

Il convient donc de rechercher dans le programmateur PR l'identificateur temporel de plus faible valeur mais supérieur au temps virtuel TV qui soit associé à un bit d'occupation positionné à un.

L'invention propose pour ce faire une méthode avantageuse en référence à la figure 2.

On organise maintenant le programmateur PR en deux pages de 16384 identificateurs temporels. L'estampille temporelle est alors calculée modulo 32768, c'est-à-dire que l'on retient le reste de sa division par 32768. Cette valeur, 32768, correspond à la capacité du programmateur.

On définit une première séquence d'occupation formée par la succession des bits d'occupation figurant dans la première page du programmateur PR en regard des identificateurs temporels 0 à 16383, le bit de poids faible b0 de cette séquence étant le bit d'occupation associé à l'identificateur temporel 0, le bit suivant b1 de cette séquence étant le bit d'occupation associé à l'identificateur temporel 1 et ainsi de suite.

Cette valeur 16384 permet de décomposer la séquence en 512 mots de 32 bits. Le premier mot A0 comprend les bits b0 à b31, le second mot A1 comprend les bits b32 à b63 et ainsi de suite jusqu'au 512^{ème} mot A511 qui comprend les bits b16352 à b16383.

Pour chaque mot Ai, on définit maintenant un indicateur Ii qui vaut zéro si tous les bits bi de ce mot sont nuls et qui vaut un dans le cas où un au moins de ces bits vaut un.

On regroupe alors les 512 indicateurs Ii en 16 champs de 32 bits, le premier champ B0 comprenant les indicateurs I0 à I31, le deuxième champ B1 comprenant les indicateurs I32 à I63 et ainsi de suite jusqu'au seizième champ formé des indicateurs I480 à I511.

Pour chaque champ Bj on définit à nouveau un index Fj qui résulte de la même fonction que l'indicateur ci-dessus. Ainsi, le jième index Fj vaut zéro si tous les indicateurs du jième champ Bj sont nuls et il vaut un dans le cas où l'un au moins de ces indicateurs est non nul.

La réunion des seize index F15, F14, ....... F1, F0, forme une première clé C de 16 bits.

On notera ici que les mots sont compressés à deux reprises par une même opération logique pour donner dans un premier temps les champs, puis dans un deuxième temps la clé. Naturellement, l'invention s'applique quel que soit le nombre de compressions, qu'il y en ait une seule ou bien plus de deux.

On définit aussi une deuxième séquence d'occupation (non représentée dans la figure) formée par la succession des bits d'occupation figurant dans la deuxième page du programmateur PR en regard des identificateurs temporels 16384 à 32767.

La deuxième séquence est également décomposée en 512 mots de 32 bits. Le premier mot A512 comprend les bits b16384 à b16415, le second mot A513 comprend les bits b16416 à b16447 et ainsi de suite jusqu'au 1023^{ème} mot A1023 qui comprend les bits b32736 à b32767.

A nouveau, on reprend un indicateur Ii qui vaut zéro si tous les bits bi du mot Ai sont nuls et qui vaut un dans le cas où un au moins de ces bits vaut un.

De même, on regroupe alors les 512 indicateurs Ii en 16 champs de 32 bits.

Pour chaque champ Bj on définit encore un index Fj.

La réunion des seize index F31, F30, ....... F17, F16, forme une deuxième clé K de 16 bits.

On introduit ici une variable binaire P qui vaut 0 lorsque la première page doit être considérée et qui vaut 1 lorsqu'il faut se référer à la deuxième page. Cette variable P est initialisée à 0.

La page identifiée par la variable P est examinée.

Si tous les bits de la clé de cette page sont nuls, cette partie de la file d'attente est vide. Il n'y a aucun paquet à réémettre dans cette page et l'on inverse la valeur de cette variable P.

Si la clé de la page examinée a une valeur différente de zéro, il convient de rechercher quel paquet doit être réémis en premier lieu.

on recherche alors dans cette page la valeur minimale jm de l'indice j pour laquelle l'index Fj est égal à un.

On recherche ensuite la valeur minimale im de l'indice i pour laquelle l'indicateur Ii est égal à un.

On recherche finalement dans le mot Aim le bit bk de poids le plus faible qui soit non nul.

Le bit bk désigne l'identificateur temporel du programmateur PR qui représente la tête de la file d'attente. Ainsi, l'adresse qui figure en regard de cet identificateur temporel est celle de la mémoire tampon où est enregistré le paquet qui doit être réémis.

Lorsque ce paquet est réémis, le bit d'occupation correspondant bk est remis à zéro.

Ensuite, le mot Aim est recalculé, le champ Bjm également, et, finalement, la clé correspondante est éventuellement corrigée.

Selon l'exemple ci dessus, le programmateur comporte deux pages car il s'agit du cas le plus simple. Naturellement, l'invention s'applique également si le nombre de pages est supérieur, l'homme du métier n'ayant pas de difficultés pour aménager la méthode exposée. Il suffit par exemple de prévoir un nombre de valeurs pour la variable P qui soit égal au nombre de pages. Lors de la procédure de réémission, si une page est vide, il faut passer à la suivante.

Comme mentionné précédemment, le temps virtuel TV est lui aussi remis à jour et prend la valeur de l'identificateur temporel du paquet qui est en cours de réémission, paquet associé au bit bk.

Lorsqu'il s'agit de réémettre un nouveau paquet, il suffit d'appliquer à nouveau la procédure de réémission décrite ci-dessus.

D'autre part, lorsqu'un nouveau paquet est reçu dans la mémoire tampon BU, outre les opérations mentionnées au début de la présente description, il convient également de modifier éventuellement le mot Ai et le champ Bj correspondants ainsi que la clé correspondante.

Si le bit d'occupation bq correspondant à ce paquet porte l'indice q, le mot Ar où r = q/32 - q[32] doit être recalculé , le champ Bs ou s = r/16 - r[16] doit également être recalculé et, pour finir, la clé doit être remise à jour.

On s'aperçoit ainsi que la réception ou l'émission d'un paquet nécessite un nombre d'opérations relativement faible puisque dans chaque cas on modifie uniquement un bit d'occupation, un mot Ai, un champ Bj et la clé.

Jusqu'à présent, on a considéré qu'un seul paquet était associé à une estampille temporelle déterminée. Il peut arriver que plusieurs paquets soient affectés de la même estampille temporelle, c'est-à-dire qu'ils doivent être associés au même identificateur temporel du programmateur PR. Dans ce cas, au lieu d'inscrire en tant que donnée une adresse unique en relation avec cet identificateur temporel, on inscrit à la place une liste chaînée des adresses qui portent l'estampille temporelle concernée. Là encore, il s'agit d'une pratique courante dans l'état de l'art qui ne sera pas plus décrite.

Par ailleurs, on a présenté l'invention en indiquant que les bits d'occupation étaient enregistrés dans le programmateur PR. Il ne faut pas voir là un impératif quelconque et ces bits d'occupation pourraient être stockés dans une autre mémoire pourvu qu'ils soient en relation avec les estampilles temporelles correspondantes.

L'invention ne se limite pas aux modes de réalisations présentés ci-dessus. En particulier, tout moyen peut être remplacé par un moyen équivalent.

## Revendications

1. Méthode de gestion d'une file d'attente de paquets reçus d'une pluralité de sources comprenant les étapes suivantes :
- stockage du dernier paquet reçu (LC) à une adresse de réception (RAd) dans une mémoire tampon (BU),
- établissement pour ce dernier paquet reçu (LC) d'une estampille temporelle (TSTP) représentant le temps théorique de sa sortie de ladite file d'attente,
- insertion de ladite adresse de réception (RAd) dans un programmateur (PR) à un emplacement identifié par l'estampille temporelle (TSTP) du dernier paquet reçu (LC),
- positionnement dans un état actif d'un bit d'occupation associé à ladite estampille temporelle (TSTP),
- détermination du ou des premiers paquets devant sortir de ladite file d'attente à partir du premier bit d'occupation actif qui suit celui du paquet qui vient de quitter la file, lesdits bits d'occupation étant classés selon l'ordre croissant des estampilles temporelles auxquelles ils sont associés,
- positionnement dans un état inactif du bit d'occupation dudit premier paquet lorsqu'il quitte la file;
**caractérisée en ce que**, les bits d'occupation successifs (b0, b1, ..., b16383) étant regroupés en mots (A0, A1, ..., A5111), le bit de poids faible (b0) du premier mot (A0) étant le bit d'occupation qui suit celui de la cellule qui vient de quitter la file, un indicateur (10, I1, ..., I511) est établi pour chacun de ces mots (A0, A1, ..., A511) qui vaut zéro lorsque tous les bits du mot sont inactifs, et qui vaut un dans le cas contraire.

2. Méthode selon la revendication 1 **caractérisée en ce que**, ledit dernier paquet reçu (LC) provenant d'une source affectée d'un niveau de priorité, l'estampille temporelle de ce paquet est fonction dudit niveau de priorité.

3. Méthode selon la revendication 2 **caractérisée en ce que**, ladite source émettant des paquets à un débit auquel correspond une période moyenne, ledit niveau de priorité correspondant à cette période (T), ladite estampille temporelle (TSTP) est supérieure ou égale à celle du paquet précédent provenant de ladite source augmentée de ladite période (T).

4. Méthode selon la revendication 3, **caractérisée en ce que** ladite estampille temporelle (TSTP) est également supérieure ou égale à l'estampille temporelle dudit premier paquet.

5. Méthode selon la revendication 4 **caractérisée en ce que**, suite au positionnement d'un bit d'occupation, l'indicateur du mot correspondant est recalculé.

6. Méthode selon la revendication 5, **caractérisée en ce que** la détermination du ou des premiers paquets devant sortir de la file d'attente s'effectue en recherchant le premier indicateur (10, I1, ..., I511), non nul puis le premier bit non nul de cet indicateur.

7. Méthode selon la revendication 5 **caractérisée en ce que**, les indicateurs successifs (I0, I1 , ..., I511) étant regroupés en champs (B0, B1, ..., B15), un index (F0, F1, ..., F15) est établi pour chacun de ces champs (B0, B1, ..., B15) qui vaut zéro lorsque tous les bits du mot sont inactifs et qui vaut un dans le cas contraire.

8. Méthode selon la revendication 7 **caractérisée en ce que**, suite au positionnement d'un bit d'occupation, l'indicateur (10, I1, ..., I511) du mot correspondant (A0, A1, ..., A511) ayant été recalculé, l'index (F0, F1, ... F15) du champ comprenant cet indicateur et recalculé.

9. Méthode selon la revendication 8, **caractérisée en ce que** la détermination du ou des premiers paquets devant sortir de la file d'attente s'effectue en recherchant le premier index (F0, F1, ..., F15 non nul, puis le premier indicateur (I0, I1, ... I511) non nul de cet index et enfin le premier bit non nul de cet indicateur.

10. Méthode selon l'une quelconque des revendications 4 à 9, **caractérisée en ce que** l'estampille temporelle dudit paquet qui vient de quitter la file d'attente est minorée, de sorte que la différence entre sa valeur présente et sa valeur précédente soit un multiple du nombre de bits desdits mots (A0,A1,..., A511).

11. Méthode selon l'une quelconque des revendications 7 à 9, **caractérisée en ce que** l'estampille temporelle du paquet qui vient de quitter la file d'attente est minorée, de sorte que la différence entre sa valeur présente et sa valeur précédente soit un multiple du produit du nombre de bits desdits mots (A0, A1, ... A511) et du nombre de mots regroupés dans un indicateur (10, I1, ...,I511).

## Claims

1. Method of managing a queue of cells received from a multiplicity of sources, including the following stages:
- storage of last cell received (LC) at a reception address (RAd) in a buffer memory (BU),
- for this last cell received (LC), establishment of a time stamp (TSTP) representing the theoretical time of its exit from said queue,
- insertion of said reception address (RAd) in a programmer (PR) at a location identified by the time stamp (TSTP) of the last cell received (LC),
- setting of an occupancy bit, associated with said time stamp (TSTP), to an active state,
- determination of the first cell(s) having to exit said queue from the first active occupancy bit which follows that of the cell which has just left the queue, said occupancy bits being sorted according to the increasing order of the time stamps with which they are associated,
- setting to an inactive state the occupancy bit of said first cell when it exits the queue;
**characterized in that**, successive occupancy bits (b0, b1, ..., b16383) being grouped into words (A0, A1, ..., A511), the least significant bit (b0) of the first word (A0) being the occupancy bit which follows that of the cell which has just exited the queue, an indicator (I0, I1, ..., I511) is established for each of these words (A0, A1, ..., A511) which has the value 0 when all bits in the word are inactive, and 1 otherwise.

2. Method according to claim 1, **characterized in that** said last cell received (LC) coming from a source allocated a priority level, the time stamp of this cell is a function of said priority level,

3. Method according to claim 2, **characterized in that** said source sending cells at a rate corresponding to an average period, said priority level corresponds to this period (T), said time stamp (TSTP) is greater than or equal to that of the preceding cell from said source plus said period (T).

4. Method according to claim 3, **characterized in that** said time stamp (TSTP) is also greater than or equal to the time stamp of said first cell.

5. Method according to claim 4, **characterized in that**, following setting of an occupancy bit, the indicator of the corresponding word is recalculated.

6. Method according to claim 5, **characterized in that** determination of the first cell(s) having to exit the queue is effected by searching for the first indicator (I0, I1, ...,I511) not set to 0, then the first bit of this indicator not set to 0.

7. Method according to claim 5, **characterized in that** successive indicators (I0, I1, ..., I511) being grouped into fields (B0, B1, ..., B15), an index (F0, F1, ..., F15) is established for each of these fields (B0, B1, ..., B15) which has the value 0 when all bits in the word are inactive and 1 otherwise.

8. Method according to claim 7, **characterized in that**, following the setting of an occupancy bit, the indicator (I0, I1, ..., I511) of the corresponding word (A0, A1, ..., A511) having been recalculated, the index (F0, F1, ..., F15) of the field including this indicator is recalculated.

9. Method according to claim 8, **characterized in that** determination of the first cell(s) having to exit the queue is effected by looking for the first index (F0, F1, ..., F15) not set to 0, then the first indicator (I0, I1, ..., I511) of this index not set to 0 and finally the first bit of this indicator not set to 0,

10. Method according to any one of claims 4 so 9, **characterized in that** the time stamp of said cell which has just come out of the queue is reduced, so that the difference between its present value and its preceding value is a multiple of the number of bits of said words (A0,A1, ..., A511).

11. Method according to any one of claims 7 to 9, **characterized in that** the time stamp of the cell which has just exited the queue is reduced, so that the difference between its present value and its preceding value is a multiple of the product of the number of bits of said words (A0, A1, ..., A511) and of the number of words grouped into an indicator (I0, I1, ..., I511).

## Patentansprüche

1. Verfahren zur Verwaltung einer Warleschlange für Pakete, welche von einer Vielzahl von Quellen empfangen wurden, wobei das Verfahren die folgenden Schritte umfasst:
- Speichern des zuletzt an einer Empfangsadresse (Rad) empfangen Pakets (LC) in einem Pufferspeicher (BU),
- Erstellen eines Zeitstempels (TSTP) für das besagte zuletzt empfangene Paket (LC), welcher die theoretische Zeit seines Verlassens der besagten Warteschlange darstellt,
- Einfügen der besagten Empfangsadresse (Rad) in einen Programmschalter (PR)an einer von dem Zeitstempel (TSTP) des zusetzt empfangenen Pakets (LC) identifizierten Stelle,
- Versetzen eines mit dem besagten Zeitstempel (TSTP) assoziierten Belegungsbits in einen aktiven Zustand,
- Ermitteln des ersten Pakets oder der ersten Pakete, welche die besagte Warteschlange verlassen sollen, auf der Basis des ersten aktiven Belegungsbits, welches dem Paket, das die Warteschlange gerade verlassen hat, folgt, wobei die besagten Belegungsbits in aufsteigender Reihenfolge der Zeitstempel, mit denen sie assoziiert sind, eingeordnet werden,
- Versetzen des Belegungsbits des besagten ersten Pakets in einen inaktiven Zustand, wenn dieses besagte erste Paket die Warteschlange verlässt;
**dadurch gekennzeichnet, dass** die aufeinanderfolgenden Belegungsbits (b0, b1,.., b16383) zu Wörtern (A0, A1, ..., A511) gruppiert werden, wobei das Bit niedriger Ordnung (b0) des ersten Worts (A0) das Belegungsbit ist, welches dem Belegungsbit der Zelle, die die Warteschlange soeben verlassen hat, folgt, wobei für ein jedes dieser Wörter (A0, A1, .... A511) ein Indikator (I0, I1 , ..., I511) erstellt wird, welcher Null ist, wenn alle Bits des Wortes inaktiv sind, und im umgekehrten Fall Eins ist.

2. Verfahren nach Anspruch 1, **dadurch gekennzeichnet, dass** für das besagte zuletzt empfangene Paket (LC), dessen Quelle eine Prioritätsstufe zugeordnet ist, der Zeitstempel dieses Pakets der besagten Prioritätsstufe entspricht.

3. Verfahren nach Anspruch 2, **dadurch gekennzeichnet, dass**, wenn die besagte Quelle Pakete bei einer Geschwindigkeit sendet, welcher eine durchschnittliche Periode entspricht, und die besagte Prioritätsstufe dieser Periode (T) entspricht, der besagte Zeitstempel (TSTP) höher als der oder gleich dem Zeitempel des vorhergehenden Pakets, welches von der besaglen Quelle kommt, erhöht um die besagte Periode (T), ist.

4. Verfahren nach Anspruch 3, **dadurch gekennzeichnet, dass** der besagte Zeitstempel (TSTP) ebenfalls höher als der oder gleich dem Zeitstempel des besagten ersten Pakets ist.

5. Verfahren nach Anspruch 4, **dadurch gekennzeichnet, dass** der indikator des entsprechenden Wortes nach dem Positionieren eines Belegungsbits neu kalkuliert wird.

6. Verfahren nach Anspruch 5, **dadurch gekennzeichnet, dass** die Ermittlung des ersten Pakets oder der ersten Pakete, welche die Warteschlange verlassens sollen, durch das Suchen nach der=m ersten Nicht-Null-Indikators (10, I1, ..., I511) und anschließend nach dem ersten Nicht-Null-Bits dieses Indikators erfolgt.

7. Verfahren nach Anspruch 5, **dadurch gekennzeichnet, dass**, wenn die aufeinanderfolgenden indikatoren (I0, I1, ..., I511) in Feldern (B0, B1, ...,B15) gruppiert sind, für ein jedes dieser Felder (B0, B1, ..., B15) ein Index (F0, F1, ..., F15) erstellt wird, welcher Null ist, wenn alle Bits des Wortes inaktiv sind, und im umgekehrten Fall Eins ist.

8. Verfahren nach Anspruch 7, **dadurch gekennzeichnet, dass**, wenn der Indikator (I0, I1, ..., I511) des entsprechenden Wortes (A0, A1, ..., A511) nach dem Positionieren eines Belegungsbits neu kalkuliert wurde, der index (F0, F1, ..., F15) des Feldes, welches diesen Indikator enthält, neu kalkuliert wird.

9. Verfahren nach Anspruch 8, **dadurch gekennzeichnet, dass** die Ermittlung des ersten Pakets oder der ersten Pakete, welche die Warteschlange verlassen sollen, durch das Suchen nach dem ersten Nicht-Null-Index (F0, F1, ..., F15) und anschließend nach dem ersten Nicht-Null-Indikator (10, I1, ..., I511) dieses Index und schließlich nach dem ersten Nicht-Null-Bit dieses indikators erfolgt.

10. Verfahren nach einem beliebigen der Ansprüche 4 bis 9, **dadurch gekennzeichnet, dass** der Zeitstempel des besagten Pakets, welches die Warteschlange soeben verlassen hat, herabgesetzt wird, so dass die Differenz zwischen seinem aktuellen Wert und seinem vorherigen Wert ein Vielfaches der Anzahl der Bits der besagten Wörter (A0, A1, ..., A511) ist

11. Verfahren nach einem beliebigen der Ansprüche 7 bis 9, **dadurch gekennzeichnet, dass** der Zeitstempel des Pakets, welches die Warteschlange soeben verlassen hat, herabgesetzt wird, so dass die Differenz zwischen seinem aktuellen Wert und seinem vorherigen Wert ein Vielfaches des Produktes der Anzahl der Bits der besagten Wörter (A0, A1, ..., A511) und der Anzahl der in einem Indikator (I0, I1, ..., I511) gruppierten Wörter ist.
